# EUROPEAN PATENT APPLICATION

(11) **EP 4 354 708 A1**
(43) Date of publication of application: **17.04.2024**
(21) Application number: 22819885.9
(22) Date of filing: 23.03.2022
(51) Int. Cl.: H02K 1/278

(54) **MOTOR ROTOR**

(30) Priority: 09.06.2021 JP 2021096269
(71) Applicant: DMG Mori Co., Ltd., Yamatokoriyama-shi, Nara 639-1160 (JP)
(72) Inventor: KAWAMOTO, Michio, Yamatokoriyama-shi, Nara 639-1160 (JP)
(74) Representative: Isarpatent
(86) International application number: PCT/JP2022/013474
(87) International publication number: WO 2022/259695

(57) **Abstract**

A motor rotor includes a rotor yoke 22 and a permanent magnet 10 bonded to an outer peripheral surface 22a of the rotor yoke 22. The rotor yoke 22 has in the outer peripheral surface 22a thereof a mounting groove 23 formed to correspond to the permanent magnet 10. Two sides 11, 12 of the permanent magnet 10 opposed to two inner walls 23a, 23b of the mounting groove 23 are formed as inclined surfaces tapering from a bottom surface side toward an opposite side of the permanent magnet 10. The mounting groove 23 is formed as tapered inclined surfaces 23a₁, 23b₁ tapering from a bottom surface toward an open side of the mounting groove 23 and widened inclined surfaces 23a₂, 23b₂ widening from the tapered inclined surfaces to the opening of the mounting groove 23. The permanent magnet 10 and the two inner walls 23a₂, 23b₂ are bonded therebetween by brazing with the permanent magnet 10 inserted between the mounting grooves 23a₁, 23b₁.

## Description

### Technical Field

0001 The present invention relates to a motor rotor which includes a rotor yoke and a permanent magnet bonded to an outer peripheral surface of the rotor yoke.

### Background Art

0002 International Publication No. WO 2004/068673 (Patent Literature 1 listed below) discloses a conventionally known example of a motor rotor including a rotor yoke and a permanent magnet bonded to an outer peripheral surface of the rotor yoke.

0003 This rotor is manufactured by forming a plating layer of a material such as copper or nickel on the entire surface of the permanent magnet, placing the permanent magnet with the plating layer thereon in contact with the outer peripheral surface of the rotor yoke, and then radiating a laser beam toward the contact contour of the permanent magnet. That is to say, the plating layer formed on the surface of the permanent magnet is melted by the laser beam radiated toward the linear contact contour of the permanent magnet, so that the melted metal (copper or nickel) acts as a brazing material to bond (braze) the permanent magnet to the outer peripheral surface of the rotor yoke.

0004 According to the disclosure, the brazing of the permanent magnet to the outer peripheral surface of the rotor yoke enables the permanent magnet to be firmly joined to the rotor yoke; therefore, the rotor is improved in the joining strength and durability, including the thermal shock resistance, at high temperature and high speed rotation.

### Citation List

### Patent Literature

0005 Patent Literature 1: International Publication No. WO 2004/068673

### Summary of Invention

### Technical Problem

0006 In recent years, the rotational speeds of motors used in various fields have become higher and higher in response to the desire for higher speed and higher efficiency; therefore, motors capable of high speed rotation have been constantly developed. Accordingly, in order to withstand a strong centrifugal force generated by high-speed rotation, the motor rotors have been required to have a further increased bonding strength between the rotor yoke and the permanent magnet and to be structurally engineered to prevent the permanent magnet from coming off from the rotor yoke.

0007 The present invention has been achieved in view of the above-described circumstances and an object of the invention is to provide a motor rotor which is improved such that a permanent magnet is less likely than that in the conventional rotor to come off from a rotor yoke even when a strong centrifugal force acts thereon. Solution to Problem

0008 To solve the above-described problem, the present invention provides a motor rotor including:
a rotor yoke; and
a permanent magnet bonded to an outer peripheral surface of the rotor yoke, wherein:
   the rotor yoke has in the outer peripheral surface thereof a mounting groove formed to correspond to the permanent magnet, and
   with a bonded side of the permanent magnet inserted in the mounting groove, two inner walls of the mounting groove and two sides of the permanent magnet opposed to the two inner walls are bonded by brazing.

0009 In the motor rotor according to this aspect (first aspect), with the bonded side of the permanent magnet inserted in the mounting groove formed on the rotor yoke, the two inner walls of the mounting groove and the two sides of the permanent magnet opposed to the two inner walls are bonded by brazing, that is to say, bonded by a brazing material embedded between the two inner walls of the mounting groove and the two sides of the permanent magnet.

0010 Thus, in the rotor according to the first aspect, the bonding surface where the rotor yoke and the permanent magnet are bonded to each other is increased as compared with the above-described conventional rotor in which the rotor yoke and the permanent magnet are bonded together by brazing the linear contact contour of the permanent magnet contacting with the rotor yoke, so that the bonding strength between the rotor yoke and the permanent magnet is increased. Consequently, as compared with the conventional rotor, the rotor according to the first aspect effectively prevents the permanent magnet from coming off from the rotor yoke, even when a strong centrifugal force generated by high-speed rotation of the rotor acts on the permanent magnet.

0011 In the first aspect, it is preferred that at least the two sides of the permanent magnet opposed to the two inner walls of the mounting groove are formed as inclined surfaces tapering from the bonded side toward a side opposite to the bonded side of the permanent magnet.

0012 In the rotor according to this aspect (second aspect), at least the two sides of the permanent magnet opposed to the two inner walls of the mounting groove are formed as inclined surfaces tapering from the bonded side toward the opposite side of the permanent magnet. Therefore, the brazing material embedded between the two inner walls of the mounting groove and the two sides of the permanent magnet through the brazing uses not only its bonding force but also a mechanical acting force produced by engagement with the permanent magnet to restrain the permanent magnet from coming off outward from the rotor yoke due to a centrifugal force.

0013 Thus, the rotor according to this second aspect more effectively prevents coming-off of the permanent magnet from the rotor yoke than the conventional rotor.

0014 In the first and second aspects, it is preferred that at least the two inner walls of the mounting groove opposed to the two sides of the permanent magnet are formed as inclined surfaces tapering toward an open side of the mounting groove.

0015 In the rotor according to this aspect (third aspect), at least the two inner walls of the mounting groove formed on the rotor yoke opposed to the two sides of the permanent magnet are formed as inclined surfaces tapering toward the open side of the mounting groove. Therefore, similarly to that in the second aspect, the brazing material embedded between the two inner walls of the mounting groove and the two sides of the permanent magnet through the brazing uses not only its bonding force but also a mechanical acting force produced by engagement with the permanent magnet to restrain the permanent magnet from coming off outward from the rotor yoke due to a centrifugal force.

0016 Thus, the rotor according to this third aspect also more effectively prevents coming-off of the permanent magnet from the rotor yoke than the conventional rotor.

0017 In the rotors according to the first to third aspects, a bottom surface of the bonded side of the permanent magnet may be bonded with an adhesive to a bottom surface of the mounting groove. The rotor according to this aspect much more effectively prevents the permanent magnet from coming off from the rotor yoke. Advantageous Effects of Invention

0018 In the rotor according to the present invention, the bonding surface where the rotor yoke and the permanent magnet are bonded to each other is increased as compared with that in the above-described conventional rotor, so that the bonding strength between the rotor yoke and the permanent magnet is increased. Consequently, as compared with the conventional rotor, the rotor according to the present invention effectively prevents the permanent magnet from coming off from the rotor yoke, even when a strong centrifugal force generated by high-speed rotation of the rotor acts on the permanent magnet.

### Brief Description of Drawings

0019
FIG. 1 is a side view illustrating a rotor according to a first embodiment of the present invention;
FIG. 2 is a front view as viewed in the direction of arrow A in FIG. 1;
FIG. 3 is an illustrative diagram showing an enlarged view of one of permanent magnet units in FIG. 1;
FIG. 4 is an illustrative diagram showing a preferable permanent magnet arrangement in the rotor according to the first embodiment;
FIG. 5 is an illustrative diagram showing an enlarged view of a permanent magnet unit in a rotor according to a second embodiment;
FIG. 6 is an illustrative diagram showing an enlarged view of a permanent magnet unit in a rotor according to a third embodiment;
FIG. 7 is an illustrative diagram showing an enlarged view of a permanent magnet unit in a rotor according to a fourth embodiment; and
FIG. 8 is an illustrative diagram showing an enlarged view of a permanent magnet unit in a rotor according to a fifth embodiment.

### Description of Embodiments

0020 Hereinafter, specific embodiments of the present invention will be described with reference to the drawings.

0021

### [First Embodiment]

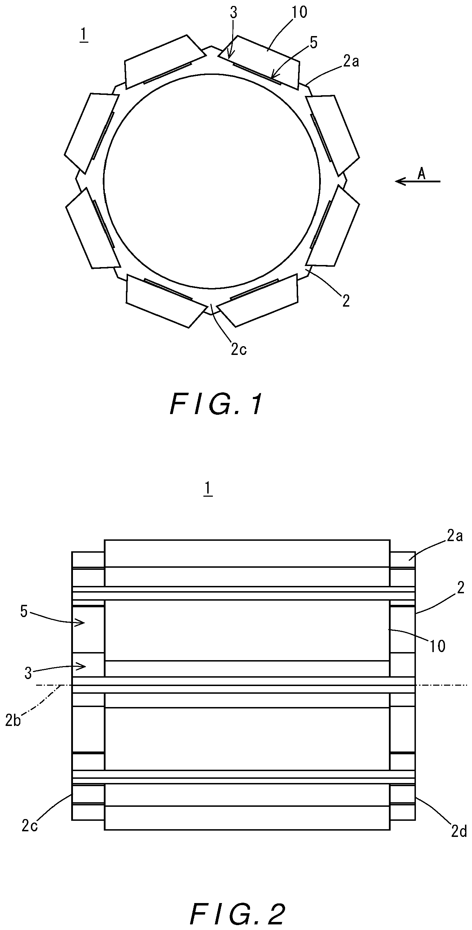

First, a motor rotor according to a first embodiment of the present invention is described on the basis of FIGS. 1 to 4. As illustrated in these figures, the rotor 1 according to this embodiment is constituted by a tubular rotor yoke 2 and permanent magnets 10. The rotor yoke 2 has an outer peripheral surface of a polygonal shape (in particular, an octagonal shape) and has an inner peripheral surface of a cylindrical shape. The permanent magnets 10 are bonded to surfaces (mounting surfaces) 2a of the outer periphery of the rotor yoke 2. Note that the shape of the rotor yoke 2 is not limited to an octagonal shape. The rotor yoke 2 may have a polygonal shape corresponding to the number of permanent magnets 10 to be provided thereon or may have an outer peripheral surface of a cylindrical shape that is similar to the inner peripheral surface.

0022 The rotor yoke 2 has a mounting groove 3 as well as a bonding groove 5 for an adhesive 6 in each mounting surface 2a thereof. The mounting groove 3a is formed substantially along an axis 2b of the rotor yoke 2 and opened to two end surfaces 2c and 2d of the rotor yoke 2. The bonding groove 5 is formed along the mounting groove 3 in a bottom surface 3c of the mounting groove 3 and opened to the two end surfaces 2c and 2d of the rotor yoke 2.

0023 Two inner walls 3a and 3b of the mounting groove 3 are formed as inclined surfaces tapering toward the open side opposite to the bottom surface 3c of the mounting groove 3. Two inner walls 5a and 5b of the bonding groove 5 are formed as surfaces vertical to a bottom surface 5c of the bonding groove 5.

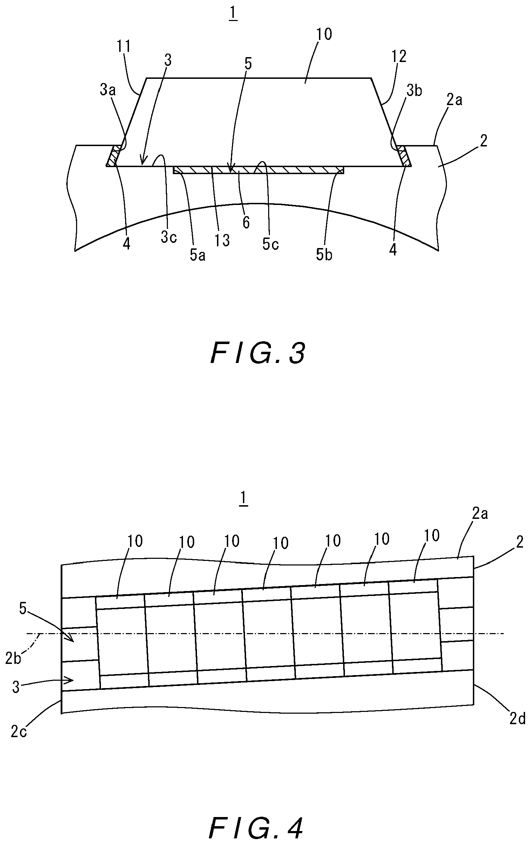

0024 Each permanent magnet 10 is composed of a prismatic body having a trapezoidal cross section and the longest side (base) thereof is inserted in the mounting groove 3. That is to say, two sides 11 and 12 of the permanent magnet 10 opposed to the two inner walls 3a and 3b of the mounting groove 3 are formed as inclined surfaces tapering from the base side toward the opposite side of the permanent magnet 10, and the base side of the permanent magnet 10 is inserted in the mounting groove 3. In one mounting groove 3, a plurality of (in this example, seven) permanent magnets 10 are inserted and mounted continuously with no gaps as shown in FIG. 4.

0025 A clearance enough for brazing is formed between each inner wall 3a, 3b of the mounting groove 3 and each side 11, 12 of the permanent magnet 10 opposed thereto. However, the width of the opening of the mounting groove 3 is smaller than the width of the base (bottom surface) of the permanent magnet 10, so that engagement between the mounting groove 3 and the permanent magnet 10 inserted in the mounting groove 3 prevents the permanent magnet 10 from slipping out radially through the opening of the mounting groove 3.

0026 In the rotor 1 according to this embodiment, a bottom surface 13 of the permanent magnet 10 is bonded to the rotor yoke 2 by the adhesive 6 that is applied in the bonding groove 5. Further, each inner wall 3a, 3b of the mounting groove 3 and each side 11, 12 of the permanent magnet 10 opposed thereto are bonded therebetween by brazing (by a brazing material 4).

0027 The brazing may use, for example, a known laser brazing method. The brazing material may be, for example, a brazing wire (copper/silicon 3% alloy). The adhesive 6 may be, for example, a epoxy resin adhesive or a silicone adhesive.

0028 Note that it is preferred that, as shown in FIG. 4, the mounting groove 3 and the bonding groove 5 are formed slightly obliquely with respect to the axis of the rotor yoke 2 and the permanent magnets 10 are also arranged slightly obliquely. This configuration prevents pulsation of the rotor 1 as assembled in a motor.

0029 In the rotor 1 according to this embodiment having the above-described configuration, with the bonded side of the permanent magnet 10 inserted in the mounting groove 3 formed on the rotor yoke 2, the two inner walls 3a, 3b of the mounting groove 3 and the two sides 11, 12 of the permanent magnet 10 opposed to the two inner walls 3a, 3b are bonded by brazing, that is to say, bonded by the brazing material embedded between the two inner walls 3a, 3b of the mounting groove 3 and the two sides 11, 12 of the permanent magnet 10. Thus, the bonding surface where the rotor yoke 2 and the permanent magnet 10 are bonded to each other is increased as compared with that in the above-described conventional rotor, so that the bonding strength between the rotor yoke 2 and the permanent magnet 10 is increased. Consequently, as compared with the conventional rotor, the rotor 1 effectively prevents the permanent magnet 10 from coming off from the rotor yoke 2, even when a strong centrifugal force generated by high-speed rotation of the rotor 1 acts on the permanent magnet 10.

0030 Further, in the rotor 1 according to this embodiment, the two inner walls 3a, 3b of the mounting groove 3 are formed as inclined surfaces tapering toward the open side opposite to the bottom surface 3c of the mounting groove 3 and the two sides 11, 12 of the permanent magnet 10 opposed to the two inner walls 3a, 3b of the mounting groove 3 are also formed as inclined surfaces tapering from the base side toward the opposite side of the permanent magnet 10. Therefore, the brazing material 4 embedded between the two inner walls 3a, 3b of the mounting groove 3 and the two sides 11, 12 of the permanent magnet 10 through the brazing to uses not only its bonding force but also a mechanical acting force produced by the engagement between the mounting groove 3 of the rotor yoke 2 and the permanent magnet 10 to restrain the permanent magnet 10 from coming off outward from the rotor yoke 2 due to a centrifugal force. Thus, the rotor 1 according to this embodiment more effectively prevents coming-off of the permanent magnet 10 from the rotor yoke 2 than the conventional rotor.

0031 Further, in the rotor 1 according to this embodiment, the width of the opening of the mounting groove 3 is smaller than the width of the base (bottom surface) of the permanent magnet 10. Therefore, the permanent magnet 10 inserted in the mounting groove 3 is, by virtue of the engagement therebetween, structurally unable to slip out radially through the opening of the mounting groove 3. Thus, the rotor 1 according to this embodiment reliably prevents the permanent magnet 10 from coming off from the rotor yoke 2, even when a strong centrifugal force generated by high-speed rotation of the rotor 1 acts on the permanent magnet 10.

0032 Furthermore, in the rotor 1 according to this embodiment, the bottom surface 13 of the permanent magnet 10 is bonded to the rotor yoke 2 by the adhesive 6 applied in the bonding groove 5. Therefore, the permanent magnet 10 is bonded to the rotor yoke 2 not only by the bonding action of the brazing material 4 but also by the adhesive 6. Thus, the permanent magnet 10 is more firmly bonded to the rotor yoke 2 by the combined bonding action of the brazing material 4 and adhesive 6.

0033

### [Second Embodiment]

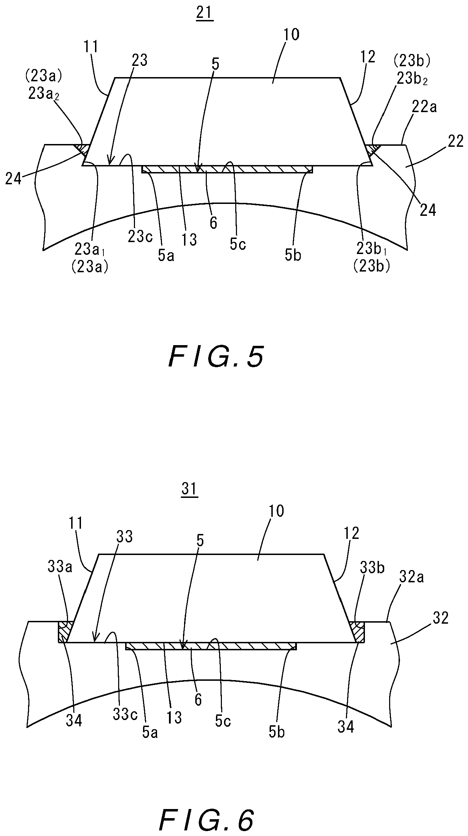

Next, a motor rotor 21 according to a second embodiment of the present invention is described on the basis of FIG. 5. The rotor 21 according to this embodiment has a rotor yoke 22 having a mounting groove 23 that differs in cross-sectional shape from that of the rotor yoke 2 of the rotor 1 according to the first embodiment. The other structures of the rotor 21 are identical to those of the rotor 1.

0034 As illustrated in FIG. 5, the mounting groove 23 has a shape in which two inner walls 23a and 23b are formed as inclined surfaces (lower inclined surfaces 23a₁ and 23b₁) tapering from a bottom surface 23c toward the opposite open side of the mounting groove 23 and then formed as inclined surfaces (upper inclined surfaces 23a₂ and 23b₂) widening toward the open side of the mounting groove 23. The permanent magnet 10 is inserted between the lower inclined surfaces 23a₁ and 23b₁ of the mounting groove 23, and each side 11, 12 of the permanent magnet 10 and each upper inclined surface 23a₂, 23b₂ of the mounting groove 23 are brazed therebetween by a brazing material 24.

0035 Note that the permanent magnet 10 can be slid along the mounting groove 23; however, no unnecessary gaps are formed between the lower inclined surfaces 23a₁, 23b₁ of the mounting groove 23 and the two sides 11, 12 of the permanent magnet 10. In FIG. 5, the reference numeral 22a denotes a mounting surface on an outer peripheral surface of the rotor yoke 22.

0036 In the rotor 21 having this configuration, the bonding force of the brazing material 24 embedded between the upper inclined surfaces 23a₂, 23b₂ of the mounting groove 23 and the two sides 11, 12 of the permanent magnet 10 prevents the permanent magnet 10 from coming off outward from the rotor yoke 21 and also prevents the permanent magnet 10 from moving along the mounting groove 23. Further, the engagement between the lower inclined surfaces 23a₁, 23b₁ of the mounting groove 23 and the two sides 11, 12 of the permanent magnet 10 structurally prevents the permanent magnet 10 from coming off from the rotor yoke 2. Thus, the rotor 21 according to this embodiment reliably prevents the permanent magnet 10 from coming off from the rotor yoke 22.

0037

### [Third Embodiment]

Next, a motor rotor 31 according to a third embodiment of the present invention is described on the basis of FIG. 6. The rotor 31 according to this embodiment has a rotor yoke 32 having a mounting groove 33 that differs in cross-sectional shape from that of the rotor yoke 2 of the rotor 1 according to the first embodiment. The other structures of the rotor 31 are identical to those of the rotor 1.

0038 As illustrated in FIG. 6, two inner walls 33a and 33b of the rotor yoke 32 in this embodiment are formed as surfaces vertical to a bottom surface 33c of the rotor yoke 32 similarly to those of the bonding groove 5. Each side 11, 12 of the permanent magnet 10 and each inner wall 33a, 33b of the mounting groove 33 are brazed therebetween by a brazing material 34. In FIG. 6, the reference numeral 32a denotes a mounting surface on an outer peripheral surface of the rotor yoke 32.

0039 In the rotor 31 having this configuration, the bonding surface where the rotor yoke 32 and the permanent magnet 10 are bonded to each other is increased as compared with the above-described conventional rotor, so that the bonding strength between the rotor yoke 32 and the permanent magnet 10 is increased. Consequently, as compared with the conventional rotor, the rotor 31 effectively prevents the permanent magnet 10 from coming off from the rotor yoke 32, even when a strong centrifugal force generated by high-speed rotation of the rotor 31 acts on the permanent magnet 10.

0040 Further, also in the rotor 31 according to this embodiment, the two sides 11, 12 of the permanent magnet 10 opposed to the two inner walls 33a, 33b of the mounting groove 33 are formed as inclined surfaces tapering from the base side toward the opposite side of the permanent magnet 10. Therefore, the brazing material 34 embedded between the two inner walls 33a, 33b of the mounting groove 33 and the two sides 11, 12 of the permanent magnet 10 through the brazing uses not only its bonding force but also a mechanical acting force produced by the engagement between the mounting groove 33 of the rotor yoke 32 and the permanent magnet 10 to restrain the permanent magnet 10 from coming off outward from the rotor yoke 32. Thus, the rotor 31 according to this embodiment more effectively prevents coming-off of the permanent magnet 10 from the rotor yoke 32 than the conventional rotor.

0041

### [Fourth Embodiment]

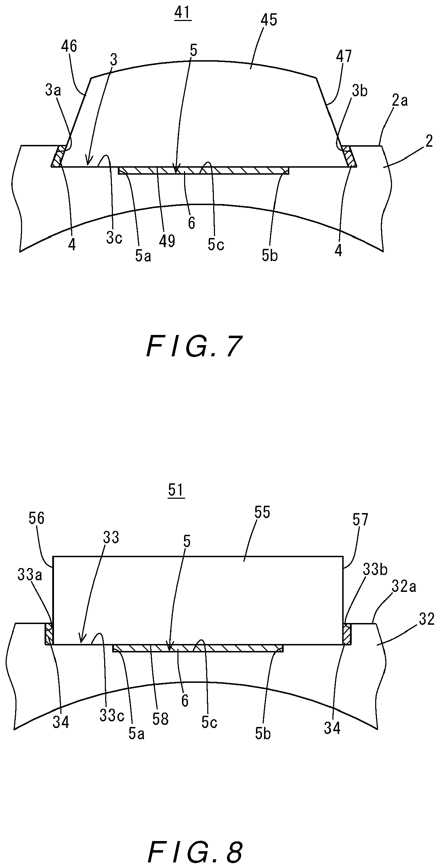

Next, a motor rotor 41 according to a fourth embodiment of the present invention is described on the basis of FIG. 7. The rotor 41 according to this embodiment has a permanent magnet 45 that differs in cross-sectional shape from the permanent magnet 10 of the rotor 1 according to the first embodiment. The other structures of the rotor 41 are identical to those of the rotor 1. Specifically, as illustrated in FIG. 7, the permanent magnet 45 in this embodiment has a top having a convex curved surface. The permanent magnet 45 having this shape provides a high magnetic flux density. In FIG. 7, the reference numerals 46 and 47 respectively denote two sides of the permanent magnet 45 and the reference numeral 49 denotes a bottom surface of the permanent magnet 45.

0042

### [Fifth Embodiment]

Next, a motor rotor 51 according to a fifth embodiment of the present invention is described on the basis of FIG. 8. The rotor 51 according to this embodiment has a permanent magnet 55 that differs in cross-sectional shape from the permanent magnet 10 of the rotor 31 according to the third embodiment. The other structures of the rotor 51 are identical to those of the rotor 1. Specifically, as illustrated in FIG. 8, the permanent magnet 55 in this embodiment has a rectangular cross section. Each side 56, 57 of the permanent magnet 55 and each inner wall 33a, 33b of the mounting groove 33 are brazed therebetween by the brazing material 34. In FIG. 8, the reference numeral 58 denotes a bottom surface of the permanent magnet 55.

0043 Also in the rotor 51 having this configuration, the bonding surface where the rotor yoke 32 and the permanent magnet 55 are bonded to each other is increased as compared with the above-described conventional rotor, so that the bonding strength between the rotor yoke 32 and the permanent magnet 55 is increased. Consequently, as compared with the conventional rotor, the rotor 51 effectively prevents the permanent magnet 55 from coming off from the rotor yoke 2, even when a strong centrifugal force generated by high-speed rotation of the rotor 51 acts on the permanent magnet 55.

0044 Above have been described specific embodiments of the present invention. However, it should be noted that the present invention is not limited to the above-described embodiments and can be implemented in other manners.

0045 For example, in the first and fourth embodiments, the width of the opening of the mounting groove 3 is set to be smaller than the width of the base (bottom surface) of the permanent magnet 10, 45. However, the present invention is not limited thereto. Where the bonding strength between the rotor yoke 2 and the permanent magnet 10, 45 is sufficiently high, the width of the opening of the mounting groove 3 may be set to be larger than the width of the base (bottom surface) of the permanent magnet 10, 45.

0046 Further, in the first to fifth embodiments, seven permanent magnets 10, 45, 55 are arranged in a row. However, the number of permanent magnets 10, 45, 55 is not limited to seven and may be less than or more than seven.

0047 Further, in the fifth embodiment, the mounting groove 33 may be replaced by the mounting groove 3 in the first and fourth embodiments.

0048 As already mentioned above, the foregoing description of the embodiments is not limitative but illustrative in all aspects. One skilled in the art would be able to make variations and modifications as appropriate. The scope of the invention is not defined by the above-described embodiments, but is defined by the appended claims. Further, the scope of the invention encompasses all modifications made from the embodiments within a scope equivalent to the scope of the claims.

### Reference Signs List

0049
- 1: Rotor
- 2: Rotor yoke
- 2a: Mounting surface
- 2b: Axis
- 2c, 2d: End surface
- 3: Mounting groove
- 3a, 3b: Inner wall
- 4: Brazing material
- 5: Bonding groove
- 5a, 5b: Inner wall
- 5c: Bottom surface
- 6: Adhesive
- 10: Permanent magnet
- 11, 12: Side
- 13: Bottom surface

## Claims

1. A motor rotor comprising:
a rotor yoke; and
a permanent magnet bonded to an outer peripheral surface of the rotor yoke, **characterized in that**:
the rotor yoke has in the outer peripheral surface thereof a mounting groove formed to correspond to the permanent magnet and having the permanent magnet inserted therein;
two sides of the permanent magnet opposed to two inner walls of the mounting groove are formed as inclined surfaces tapering from a bottom surface side toward an opposite side of the permanent magnet;
the two inner walls of the mounting groove opposed to the two sides of the permanent magnet are formed as tapered inclined surfaces tapering from a bottom surface toward an open side of the mounting groove and widened inclined surfaces widening continuously from the tapered inclined surfaces to an opening of the mounting groove; and
the widened inclined surfaces of the mounting groove and the two sides of the permanent magnet opposed to the widened inclined surfaces are bonded by brazing with the inclined surfaces of the permanent magnet inserted between the tapered inclined surfaces of the mounting groove.

2. The motor rotor according to claim 1, **characterized in that** a bottom surface of the permanent magnet is bonded with an adhesive to the bottom surface of the mounting groove.
